# FASCICULE DE BREVET EUROPEEN

(11) **EP 2 420 166 B1**
(45) Date de publication et mention de la délivrance du brevet: **14.08.2013**
(21) Numéro de dépôt: 11177719.9
(22) Date de dépôt: 16.08.2011
(51) Int. Cl.: B62B 3/14, B60N 2/00, A47D 13/02, B60N 2/28, B62B 7/14, B60N 2/26

(54) **Nacelle avec détecteurs de tension de sangles**
Gondel mit Spannungssensoren für Gurte
Cradle with strap tension detectors

(30) Priorité: 19.08.2010 FR 1056680
(43) Date de publication de la demande: 22.02.2012
(73) Titulaire: Dorel France SA, 49309 Cholet Cedex (FR)
(72) Inventeur: Godard, Christian, 85110 Sainte Cécile (FR); Blais, Emilie, 79140 Cerizay (FR)
(74) Mandataire: Bioret, Ludovic

(56) Documents cités:
- EP-A1- 0 486 184
- EP-A1- 0 827 890
- EP-A2- 2 210 769
- WO-A1-00/66391
- WO-A2-2006/029218
- FR-A1- 2 736 609
- FR-A3- 2 767 044

## Description

Le domaine de l'invention est celui de la puériculture, et plus précisément du transport des enfants en bas âge ou des nourrissons. Plus précisément encore, l'invention concerne les nacelles, ou couffins, permettant le transport en position allongée des enfants entre 0 et 6 mois environ.

De telles nacelles sont connues et notamment décrites dans le document WO 00/66391 A1 correspondant au préambule de la revendication independante. Elles présentent généralement une coque rigide, au fond de laquelle est placé un matelas, sur lequel l'enfant peut reposer. Elles sont généralement munies de poignées, permettant le transport de la nacelle par un adulte. Ces poignées sont préférentiellement amovibles, et peuvent par exemple s'escamoter à l'intérieur de la coque, ou être articulées, pour libérer l'accès à l'intérieur de la nacelle.

Des moyens de solidarisation réversible à un châssis de voiture d'enfant, ou à un autre moyen de support, peuvent être prévus. Il peut notamment s'agir de moyens mis en oeuvre par le demandeur, et connus sous la marque Moduloclip® (dont la technique est décrite notamment dans le document de brevet EP 0 827 890).

Ces nacelles peuvent, dans certains cas, être également utilisées dans un véhicule. Dans ce cas, elles doivent en outre comprendre des éléments de solidarisation à la banquette du siège du véhicule. Cette solidarisation peut être assurée à l'aide de pinces de type Isofix®, aptes à coopérer avec des éléments d'accrochage correspondants prévus à cet effet dans le véhicule, entre le dossier et l'assise. Selon une autre approche, il est connu de solidariser la nacelle à deux ceintures de sécurité du véhicule, par l'intermédiaire d'une portion de sangles s'étendant depuis un bord de la nacelle jusqu'à une sangle de la ceinture de sécurité du véhicule. Le demandeur a notamment développé un dispositif permettant une solidarisation simple et efficace à la sangle de ceinture de sécurité, connu sous le nom de Fixauto®.

Lorsque la nacelle est utilisée dans un véhicule, il est important que la nacelle soit convenablement installée dans le véhicule et donc, selon le mode de réalisation présenté à titre d'exemple ci-dessus, que les deux éléments Fixauto® soit convenablement solidarisés aux sangles de ceinture de sécurité, pour éviter que la nacelle ne bascule, en cas de choc ou de coup de frein brusque, ou soit projetée dans l'habitacle du véhicule. De la même façon, il faut que l'enfant soit convenablement maintenu à l'intérieur de la nacelle, à l'aide de moyens de maintien prévus à cet effet, qui peuvent être un baudrier ou un harnais.

Pourtant, il existe un risque important que ces installations soient mal effectuées, par inadvertance ou mauvaise mise en oeuvre des moyens prévus, ce qui introduit évident une mise en danger de l'enfant transporté, notamment d'accident ou de freinage brusque. Ce risque de mauvaises installations (« misuse » en anglais) est d'autant plus important que d'autres moyens de fixation existent pour d'autres utilisations. Par exemple, si l'utilisateur a tout d'abord transporté l'enfant sur un châssis de poussette, il a utilisé les fixations spécifiques au montage sur un châssis de poussette (Moduloclip® par exemple, dont la technique est par exemple décrite dans le brevet EP 0 827 890). Il ne sera donc pas directement incité à penser à d'autres moyens de fixation, au moment du transfert dans un véhicule.

De la même façon, lors d'une utilisation sur un châssis de poussette, ou en tant que lit d'appoint, l'enfant n'est pas obligatoirement attaché par un harnais ou un baudrier. En effet, la sécurité, et donc les normes, ne l'imposent pas.

L'utilisation de telles nacelles dans des véhicules présente donc des risques importants d'omission ou de mauvais montage, et en conséquence des risques très forts sur la santé, voire la vie, de l'enfant.

On connait par ailleurs des sièges auto décrits notamment dans le document WO 2006/029218 A2, définissant entre autre des moyens de génération d'alarme prenant en compte la règle de non génération d'une alarme si un enfant n'est pas présent.

L'invention a notamment pour objectif de pallier ces inconvénients.

Plus précisément, un objectif de l'invention est de fournir une nacelle pour le transport allongé des enfants en bas âge qui limite fortement, de façon simple et efficace, ces risques.

Un autre objectif de l'invention est de fournir une telle nacelle dont la mise en oeuvre est aisée et ergonomique.

Encore un autre objectif de l'invention est de fournir une telle nacelle, qui reste relativement simple à produire, sans surcoût important, et qui soit fiable dans le temps.

Ces objectifs, ainsi que d'autres qui apparaîtront par la suite, sont atteints selon l'invention à l'aide d'une nacelle pour le transport d'un enfant en position allongée, équipée de moyens de maintien de l'enfant à l'intérieur de ladite nacelle et de deux éléments de solidarisation aptes à coopérer avec des éléments d'accrochage complémentaires d'un véhicule automobile.

Selon l'invention, qui est définie par les caractéristiques techniques de ladite revendication indépendante, une telle nacelle comprend des moyens de contrôle de la solidarisation desdits éléments de solidarisation avec lesdits éléments de d'accrochage, délivrant un premier et un deuxième signal électrique, des moyens de détection de la présence d'un enfant dans ladite nacelle, délivrant un troisième signal électrique, et des moyens de génération d'une alarme, en fonction d'une analyse desdits premier, deuxième et troisième signaux électriques, les moyens de génération d'alarme prenant en compte au moins une des règles suivantes :
- non génération d'une alarme si un enfant n'est pas présent, ce qui correspond à une nacelle vide, dans le véhicule ou en dehors ;
- non génération d'une alarme si un enfant est présent mais qu'aucune manipulation desdits éléments de solidarisation n'est effectuée, ce qui correspond à une utilisation de ladite nacelle en dehors d'un véhicule ;
- non génération d'une alarme si un enfant est présent et que l'un desdits éléments de solidarisation est détendu pendant un court laps de temps, ce qui correspond à une situation temporaire due au déplacement du véhicule ;
- non génération d'une alarme pendant un laps de temps, après la détection de présence d'un enfant et/ou du verrouillage et/ou du serrage desdits moyens de maintien, ce qui correspond à la période d'installation de la nacelle dans le véhicule ;
- génération d'au moins un signal d'installation partielle ou en cours.

Ainsi, on prend en compte la présence d'un enfant dans la nacelle, pour générer ou non une alarme, en cas de mauvaise solidarisation de la nacelle dans un véhicule. De cette façon, il n'y a pas de génération d'alarme en l'absence d'enfant.

Selon un mode de réalisation particulier, chaque élément de solidarisation comprend une portion de sangle, et lesdits moyens de contrôle de la solidarisation comprennent des moyens de détection de la solidarisation et/ou de la tension suffisante de ladite portion de sangle.

Un exemple d'une telle portion de sangle est le dispositif connu sous la marque Fixauto®.

Dans ce cas notamment, chaque portion de sangle est solidarisée à ladite nacelle à l'aide d'un élément mobile pouvant prendre deux positions, une position de repos, lorsque la portion de sangle n'est pas en place, ou n'est pas en tension, et une position de solidarisation, assurant la fermeture d'un premier, respectivement d'un deuxième, contact électrique agissant sur ledit premier, respectivement deuxième, signal électrique, lorsque ladite portion de sangle est solidarisée à la nacelle.

Selon un autre mode de réalisation particulier, lesdits éléments de solidarisation comprennent des pinces Isofix® aptes à être solidarisées à des anneaux complémentaires solidaires du véhicule, lesdits moyens de contrôle de la solidarisation correcte comprennent des moyens de détection du verrouillage desdites pinces.

Selon une caractéristique particulière, lesdits moyens de détection de la présence d'un enfant peuvent comprendre un dispositif s'étendant sous un matelas, et pouvant prendre deux positions, une position de repos, prise en l'absence d'un poids suffisant sur ledit dispositif, et une position de détection de présence d'un enfant, assurant la fermeture d'un troisième contact électrique, lorsqu'un enfant est présent dans ladite nacelle.

Cette approche est particulièrement simple et efficace.

Selon un autre aspect particulier, une telle nacelle peut comprendre des moyens de détection de verrouillage et/ou de serrage desdits moyens de maintien de l'enfant, délivrant un quatrième signal électrique.

Pour la sécurité optimale de l'enfant, il est également souhaitable de vérifier que ces moyens de maintien, qui peuvent notamment être un harnais ou un baudrier, sont verrouillés (et le cas échéant serrés), au moins lorsque la nacelle est dans un véhicule. Dans d'autres utilisations, il peut ne pas être nécessaire de générer une alarme même si les moyens de maintien ne sont pas en place.

Selon une autre caractéristique de l'invention, lesdits moyens de génération d'alarme comprennent des moyens de temporisation, appliquant un premier délai prédéterminé avant la génération d'une alarme, de façon à prendre en compte le temps d'installation d'un enfant dans la nacelle.

Un tel délai peut notamment être utilisé pour des moyens d'alarme sonores (les moyens lumineux étant quant à eux mis en oeuvre sans délai).

De même, lesdits moyens de génération d'alarme peuvent comprendre des moyens de temporisation, appliquant un second délai prédéterminé avant la génération d'une alarme, de façon à prendre en compte une tension insuffisante, mais temporaire.

Selon différents modes de réalisation, lesdits moyens de génération d'alarme peuvent donc assurer l'émission d'alarmes lumineuses, via au moins une diode électroluminescente, et/ou d'alarmes audibles.

D'autres caractéristiques et avantages de l'invention apparaîtront plus clairement à la lecture de la description suivante d'un mode de réalisation particulier, donné à titre de simple exemple illustratif et non limitatif, et des dessins annexés parmi lesquels :
- la figure 1 présente un exemple de nacelle mettant en oeuvre l'invention ;
- les figures 2A et 2B illustrent schématiquement un exemple de moyens de détection de la présence d'une portion de sangle de solidarisation;
- la figure 3 illustre schématiquement un exemple de moyens de détection de la présence d'un enfant dans la nacelle ;
- la figure 4 est un schéma synoptique des moyens électroniques pouvant être mis en oeuvre dans la nacelle de la figure 1,
- les figures 5A à 5C illustrent les moyens connus sous le terme Fixauto®.

L'invention propose donc un système de contrôle de la bonne installation de la nacelle et de l'enfant, notamment dans un véhicule, à partir de plusieurs capteurs, de moyens de contrôle mettant en oeuvre une logique adaptée, par exemple à l'aide d'un microcontrôleur, et d'indicateurs correspondants, par exemple sous la forme de diodes électroluminescentes, (« leds ») et/ou de moyens sonores (« buzzer » par exemple).

Ces différents moyens sont configurés, selon les modes de réalisation, pour garantir la sécurité de l'enfant dans l'auto, et si possible permettre des utilisations différentes, notamment lorsque la nacelle est utilisée en tant que lit d'appoint ou sur un châssis de poussette.

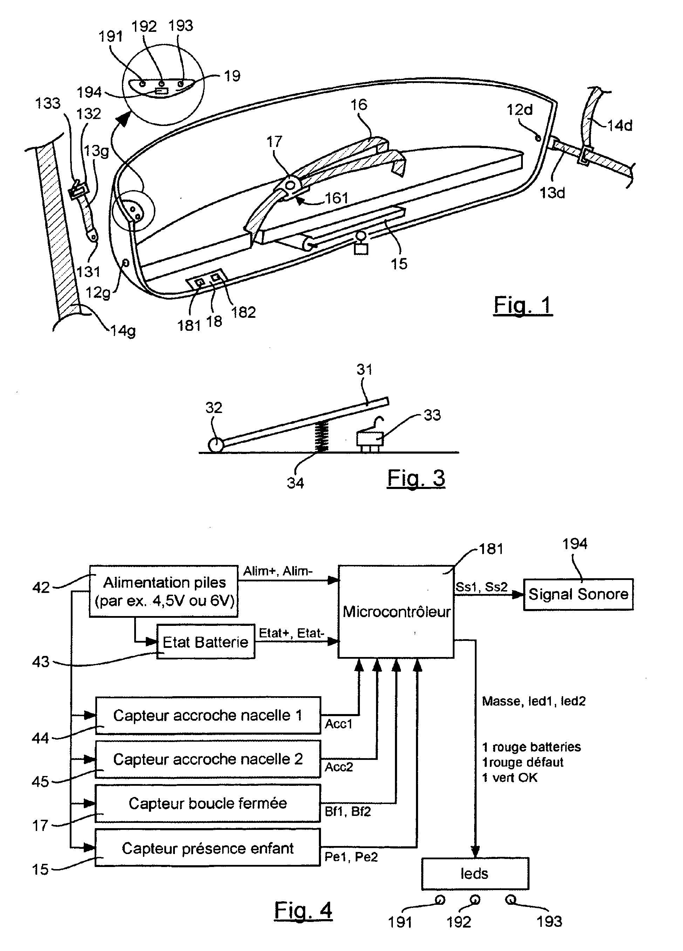

La figure 1 illustre un exemple de nacelle selon l'invention. Cette figure montre plus précisément une nacelle fictivement découpée dans le sens de la longueur, de façon à en faire apparaître les principaux éléments internes.

Elle comprend donc une coque 11, selon laquelle sont prévus, à chaque extrémité, des éléments de solidarisation, ou d'accrochage, 12_{g} et 12_{d}, aptes à coopérer avec des portions de sangle de liaison 13_{g} et 13_{d}, permettant de solidariser la nacelle aux sangles de ceinture de sécurité 14_{g} 14_{d} du véhicule.

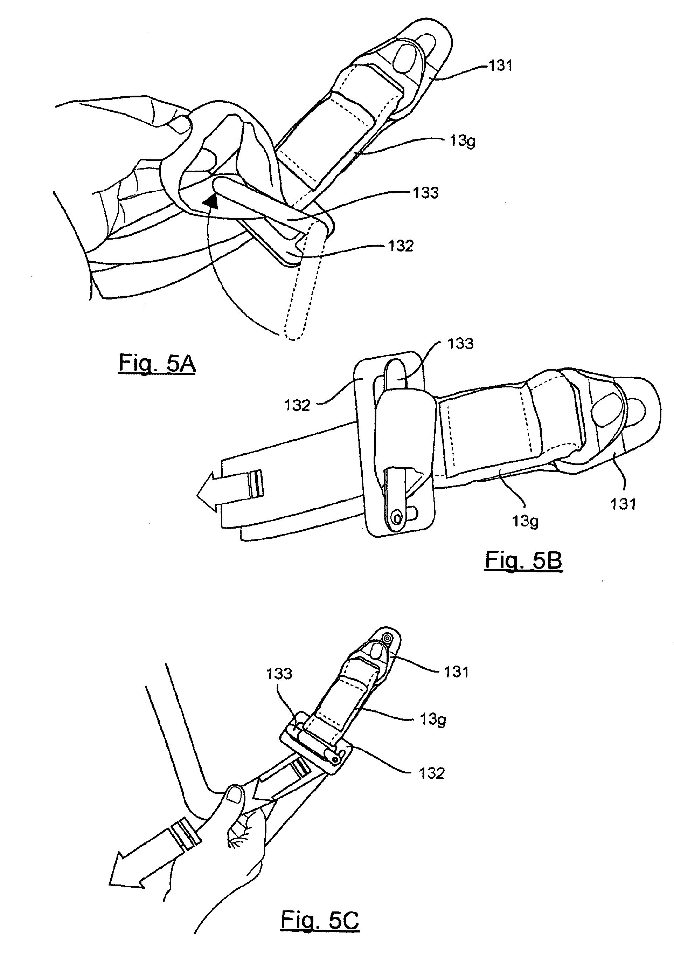

Ces portions de sangle sont munies d'une part d'un élément d'accrochage femelle 131, prévu pour coopérer avec l'élément d'accrochage 12_{g} de la nacelle, à l'autre extrémité de la portion de sangles 13_{g} est prévu un élément 132 de solidarisation avec la sangle de ceinture de sécurité 14_{d}, conçu de façon à recevoir et à maintenir une boucle formée dans la sangle de ceinture de sécurité. Comme déjà précisé, cette portion de sangle peut notamment mettre en oeuvre les moyens connus sous le terme Fixauto® notamment illustré en relation avec la figure 1 et les figures 5A à 5C.

Le système Fixauto®, développé par la Titulaire, est connu en soi et déjà mis en oeuvre sur certaines nacelles. Selon ce système, l'élément 132 de solidarisation présente une ouverture dans laquelle pénètre une boucle formée dans la sangle de ceinture de sécurité. Sur cet élément de solidarisation est fixé un élément 133 de maintien (mobile en rotation et en translation dans une lumière formée dans l'élément 132), dont la longueur est supérieure à l'ouverture de l'élément 132 de solidarisation.

La rotation de l'élément de maintien 133 dans un plan sensiblement parallèle au plan de la boucle de l'élément de solidarisation 132 lui permet d'être inséré au creux de la boucle formée dans la sangle de sécurité comme illustré sur les figures 5A à 5C. La position de cet élément 133 dans la sangle permet d'en assurer le blocage dans l'ouverture de l'élément 132 de solidarisation, lorsque la sangle est en tension.

En revanche, lorsqu'on souhaite désolidariser la nacelle des sangles de ceinture de sécurité du véhicule, la tension de la sangle est tout d'abord relâchée, de sorte à permettre de détendre la boucle, ce qui permet à l'utilisateur d'ôter l'élément 133 de la boucle par rotation, de sorte que l'élément 133 ne soit plus superposé au-dessus de l'ouverture de l'élément 132, tel que représenté en pointillé sur la figure 5A.

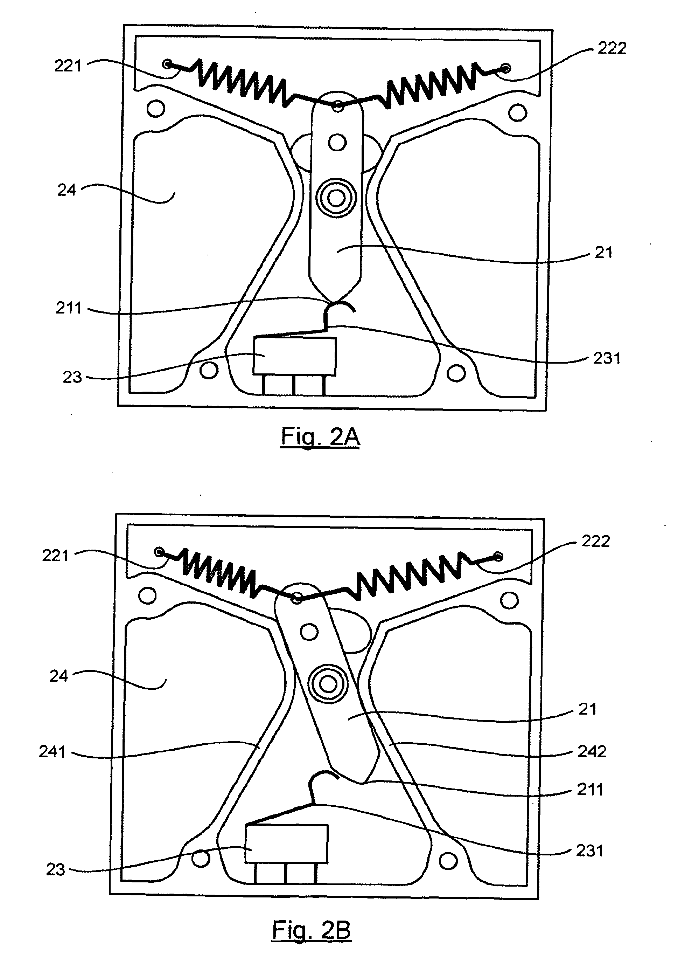

Pour l'exemple, la portion de sangle 13_{d} est correctement solidarisée au véhicule, par l'intermédiaire de la ceinture de sécurité 14_{d}, alors que la portion de sangles 13_{g} n'est pas solidarisée à la nacelle. Dans cette situation, une alarme doit être émise (le cas échéant après un délai de temporisation prédéterminé) pour inciter l'utilisateur à effectuer cette solidarisation, au moins si un enfant est présent dans la nacelle. La détection de la solidarisation, et le cas échéant de la tension suffisante, est assurée par exemple par les moyens de détection, ou capteurs, illustrés par les figures 2A et 2B, commentées ci-après.

La nacelle est par ailleurs équipée de moyens 15 de détection, ou capteurs, de la présence d'un enfant dans la nacelle. Ceci permet, par exemple, d'éviter la génération d'une alarme lorsque la nacelle est montée dans le véhicule mais que le harnais 16 n'est pas verrouillé (ce qui n'est bien sûr pas nécessaire ni même souhaitable, pour des raisons d'ergonomie), lorsque aucun enfant n'est présent dans la nacelle.

Le harnais, ou plus généralement les moyens de maintien de l'enfant, qui peuvent par exemple être, en variante, un baudrier, comprennent également un capteur 17, délivrant une information sur le verrouillage ou le non verrouillage du harnais 16.

Dans certains modes de réalisation, ces capteurs peuvent également être adaptés pour vérifier que le harnais est non seulement verrouillé, mais suffisamment tendu. Il est également possible de prévoir un capteur spécifique pour cet aspect.

Une carte électronique 18, équipée par exemple d'un microcontrôleur 181, et/ou de moyens logiques (analogiques et/ou numériques), reçoit des différents capteurs mentionnés ci-dessus des signaux électriques, indiquant l'état de chacun des capteurs. En fonction de l'analyse de ces signaux, définie par un programme adapté, le microcontrôleur 181 pilote des indicateurs 19, qui sont ici, dans le mode de réalisation illustré, trois diodes :
- une diode rouge 191 indiquant l'état de la batterie ou des piles 182, et étant allumée lorsque ces batteries ou piles sont déchargées ou usées ;
- une diode rouge 192, indiquant un défaut d'installation ;
- une diode verte 193, indiquant une installation correcte.

Des moyens d'émission d'un signal sonore, par exemple sous la forme d'un buzzer 194, peuvent également être prévus. Notamment, ce buzzer 194 peut être activé après un certain laps de temps, par exemple entre 5 et 15 secondes après que la diode rouge 192 a été allumée, et qu'aucune action correctrice n'a été effectuée. On laisse ainsi le temps à l'utilisateur d'effectuer normalement l'installation (il faut par exemple un certain temps pour solidariser le deuxième Fixauto® après que le premier a été correctement solidarisé (et, dans cette situation, la diode 192 est, bien sûr, allumée). On peut également prévoir que le buzzer émet des signaux variables, par exemple avec un rythme et/ou un niveau sonore de plus en plus élevé, au fur et à mesure que le temps s'écoule.

Les figures 2A et 2B illustrent un exemple de capteurs, permettant la détection de la solidarisation, ou l'accrochage, des portions de sangles Fixauto® à la nacelle. Ces moyens de détection de l'accrochage sont montés sur la face tournée vers l'intérieur de la nacelle, en regard des éléments d'accrochage 12_{g}, 12_{d}.

La figure 2A illustre la situation au repos, c'est-à-dire celle de l'élément 12_{g}, qui n'est pas relié à la portion de sangle 13_{g}. La figure 2B illustre la situation lorsque la portion de sangle est solidarisée à la nacelle, comme c'est le cas pour l'élément d'accrochage 12_{d}.

Lorsque l'élément 131_{g} n'est pas solidarisé à l'élément d'accrochage 12_{g}, la pièce 21 mobile en rotation par rapport à un support 24 se trouve en position sensiblement verticale, maintenue en équilibre dans cette position par les deux ressorts 221 et 222. Dans cette position, l'extrémité inférieure 211 de cette pièce mobile 21 est en contact avec le levier 231 d'un microrupteur 23, qui est ainsi actionné, au repos (c'est-à-dire lorsque le Fixauto® n'est pas mis en place). Lorsque l'élément femelle 131_{d} est solidarisé à l'élément d'accrochage 12_{d}, la pièce mobile 21 bascule dans une direction ou dans l'autre (à gauche ou à droite), de façon que son extrémité 211 ne soit plus en contact avec le levier 231 du microrupteur 23, qui passe alors dans une position libérée. Ainsi, dans une interprétation numérique, le microrupteur 23 délivre un premier signal « ON » ou « 1 » (représentant l'information « non accroché ») dans la position de la figure 2A, et une seconde information « OFF » ou « 0 » (représentant l'information « accroché ») dans la position de la figure 2B.

On note que le support 24 est configuré pour présenter des butées 241, 242, qui limitent la course de la pièce mobile 21.

On note par ailleurs que, dans la position de la figure 2B, le ressort 222 s'est tendu. Dès que la portion de sangles 13_{d} sera retirée, ce ressort 222 agira sur la pièce mobile en rotation 21, pour qu'elle reprenne sa position de la figure 2A.

Lors du déplacement du véhicule, et par exemple en cas de freinage et/ou de virage, il est possible que la nacelle se déplace légèrement, et que la tension de l'un des Fixauto® se détende momentanément, puis reprenne sa position normale. Il n'est bien sûr pas utile qu'une alarme pour tension insuffisante soit émise, bien que la tension soit, pendant un court laps de temps, insuffisante.

Pour éviter une telle génération d'alarme intempestive, on peut prévoir une règle de contrôle concernant le cas d'une tension (très) temporairement insuffisante, due par exemple au déplacement de la nacelle dans le véhicule, lors d'un virage ou d'un freinage, la nacelle retrouvant immédiatement ensuite sa position normale.

La boucle de harnais 161 comprend également un interrupteur 17, par exemple un microrupteur, permettant de détecter qu'elle est verrouillée.

Enfin, les moyens de détection de la présence d'un enfant peuvent également mettre en oeuvre un microrupteur, comme illustré schématiquement sur la figure 3. On a en effet prévu dans ce mode de réalisation, un panneau 31 mobile en rotation autour d'un élément formant charnière 32, et destiné à être recouvert d'un matelas (non représenté). Au voisinage de l'extrémité opposée à la charnière, un microrupteur 33 est prévu, assurant la fonction de détection de présence d'un enfant. Des moyens de rappel, par exemple un ressort 34 (qui peut être un ressort hélicoïdal ou une lame formant ressort) tend à relever le panneau 31. Le cas échéant, une butée peut être prévue pour limiter cette remontée.

Ainsi, lorsqu'un enfant est installé dans la nacelle, son poids déplace le panneau 31 vers le bas, de façon qu'il soit en contact avec le microrupteur 33, qui passe alors dans l'état activé. En l'absence d'enfant, les moyens de rappel 34 agissent sur le panneau, pour l'éloigner du microrupteur 33, qui repasse alors dans l'état libéré. Les moyens de rappel 34 sont tarés pour être adaptés au poids minimal d'un enfant.

La figure 4 est un schéma synoptique simplifié des moyens électroniques de l'invention, selon un mode de réalisation.

Un microcontrôleur est alimenté par des piles 182, ou des batteries, par exemple en 4, 5 Volts ou 6 Volts.

Des moyens 43 de mesure de l'état de la batterie délivrent au microcontrôleur une information sur l'état des piles, par exemple sous la forme d'un signal binaire « état +, état - » , indiquant si les piles ou batteries sont dans un état acceptable (état +) ou sont trop faibles (état -).

Par ailleurs, quatre capteurs alimentent le microcontrôleur 181 :
- deux capteurs 44, 45 indiquant l'accrochage ou le non accrochage des portions de sangles ou de liaison à la ceinture de sécurité du véhicule ;
- un capteur 17 de verrouillage de la boucle du harnais ;
- un capteur 15 de présence de l'enfant.

En fonction de l'ensemble de ces informations, le microcontrôleur pilote trois diodes leds, respectivement :
- une diode 191 rouge d'état de la batterie ;
- une diode rouge 192 de défaut ;
- une diode verte 193 d'installation correcte.

Par ailleurs, le microcontrôleur 181 pilote la génération 194 d'un signal sonore, par exemple par l'intermédiaire d'un buzzer.

On notera que la diode verte 193 peut être supprimée. En effet, si aucune diode rouge n'est allumée, ceci signifie que l'installation est correcte. Cependant, cette diode verte peut permettre de rassurer l'utilisateur, en lui confirmant que l'installation a été effectuée correctement. On peut, par ailleurs, prévoir que cette diode verte s'éteigne au bout d'un certain temps. En effet, le rôle de cette diode est essentiellement de confirmer la bonne installation, et n'est plus utile ensuite.

Le tableau suivant résume schématiquement la logique mise en oeuvre par le microcontrôleur 181, dans un exemple de mise en oeuvre particulier.

| ETATS CAPTEURS | | | | | Descriptif cas d'utilisation: | Interfaces |
|---|---|---|---|---|---|---|
| Bébé dans nacelle | Fixauto n°1 fixé sur nacelle | Fixauto n°2 fixé sur nacelle | Harnais verrouillé | Batterie faible | | |

| **Nacelle sans enfant** | | | | | | |
|---|---|---|---|---|---|---|
| 0 | 0 | 0 | 0 | 0 | nacelle rangée | RIEN |
| 0 | 0 | 0 | 0 | 0 | nacelle vide dans voiture | RIEN |
| 0 | 1 | 1 | 0 | 0 | nacelle vide dans voiture (attachée) | RIEN |

| **Nacelle utilisé en lit d'appoint ou sur poussette (avec enfant)** | | | | | | |
|---|---|---|---|---|---|---|
| 1 | 0 | 0 | 0 | 1 | batterie faible | Led batterie |
| | | | | | | |
| 1 | 0 | 0 | 0 | 0 | bébé non attaché | RIEN |
| 1 | 1 | 0 | 0 | 0 | bébé non attaché, un ou deux fixauto restés sur nacelle | Led défaut+ batterie buzz>30s |
| 1 | 0 | 1 | 0 | 0 | | |
| 1 | 1 | 1 | 0 | 0 | | |
| 1 | 0 | 0 | 1 | 0 | bébé attaché | RIEN |
| 1 | 1 | 0 | 1 | 0 | bébé attaché, un ou deux fixauto restés sur nacelle (on prévient l'utilisateur : les fixauto devraient rester dans le véhicule) | Led défaut+ batterie buzz >30s |
| 1 | 0 | 1 | 1 | 0 | | |
| 1 | 1 | 1 | 1 | 0 | | |

| **Nacelle dans véhicule (avec enfant)** | | | | | | |
|---|---|---|---|---|---|---|
| 1 | 0 | 0 | 0 | 1 | batterie faible | Led batterie |
| 1 | 0 | 0 | 0 | 0 | bébé non attaché | RIEN |
| 1 | 1 | 0 | 0 | 0 | bébé non attaché, fixauto n°1 | Led défaut+ buzz>30s |
| 1 | 0 | 1 | 0 | 0 | bébé non attaché, fixauto n°2 | Led défaut+ buzz>30s |
| 1 | 1 | 1 | 0 | 0 | bébé non attaché, fixauto n°1+n°2 | Led défaut+ buzz>30s |
| 1 | 1 | 0 | 1 | 0 | bébé attaché, fixauto n°1 | Led défaut+ buzz>30s |
| 1 | 0 | 1 | 1 | 0 | bébé attaché, fix auto n°2 | Led défaut+ buzz>30s |
| 1 | 1 | 1 | 1 | 0 | bébé attaché, fix auto n°1+n°2 | RIEN |

On comprend donc que, dans ce mode de réalisation :
- il n'y a pas de génération d'information de défaut, visuelle ou sonore, en l'absence d'enfant. Ceci signifie que, logiquement, on tolère que la nacelle ne soit pas correctement solidarisée, si elle est vide ;
- inversement, si un enfant est présent, que la boucle du harnais est verrouillée et que les deux capteurs de solidarisation de la nacelle sont actionnés, on considère que l'installation est correcte (allumage de la diode verte si elle est présente) ;
- si un enfant est présent et que seulement l'un deux éléments de solidarisation de la nacelle au véhicule est solidarisé, on considère qu'il y a un défaut, et la diode rouge 192 est allumée ;
- si un enfant est présent, que les deux éléments de solidarisation sont solidarisés mais que le harnais n'est pas verrouillé, la diode rouge 192 est également allumée ;
- en revanche, si les deux éléments de solidarisation ne sont pas solidarisés, on considère qu'il s'agit d'une utilisation hors véhicule, et il n'y a pas de génération d'alarme, même si le harnais n'est pas verrouillé et qu'un enfant est présent.

Concernant ce dernier point, pour une sécurité optimale, il peut être souhaitable de disposer d'une information réelle sur le fait que la nacelle est présente ou non dans un véhicule (pour éviter le cas d'une utilisation dans laquelle aucune des deux portions de solidarisation n'aura été solidarisée au véhicule). Pour cela, on peut par exemple compléter les capteurs de solidarisation par des capteurs de tension suffisante. Ainsi, dans ce cas, on ne détecte pas uniquement la présence de la portion de sangles, mais sa tension suffisante, ce qui suppose qu'elle a été solidarisée à la ceinture de sécurité du véhicule. Il est à noter que ce problème ne se pose pas dans le cas où la fixation du véhicule est assurée par des pinces Isofix® puisqu'on détecte alors leur fixation correcte et donc simultanément la présence dans un véhicule.

On notera que dans l'exemple du tableau ci-dessus, on regroupe, pour les Fixauto®, la détection de la présence et de la tension, ce qui explique qu'une même séquence (détection des deux Fixauto® + présence enfant + harnais verrouillé) entraîne une alarme pour la poussette (détection de l'absence des deux Fixauto®) et pas d'alarme, ou diode verte, pour l'installation dans une auto (deux Fixauto® présents et tendus).

Selon un autre exemple de mise en oeuvre, ce tableau peut être modifié, pour passer de la notion de détection de la présence du Fixauto® à celle de la mise sous tension de celui-ci. Ainsi, en voiture, on détecte la tension des deux Fixauto®, et non seulement leur présence, alors qu'avec une poussette, la simple détection de leur présence entraîne une alarme, signalant que le (ou les) Fixauto® aurait dû rester dans le véhicule.

Plus généralement, il est bien sûr possible de ne mettre en oeuvre que certaines de ces règles, de les adapter et/ou d'en ajouter.

## Revendications

1. Nacelle pour le transport d'un enfant en position allongée, équipée de moyens de maintien (16) de l'enfant à l'intérieur de ladite nacelle et de deux éléments de solidarisation (12_{g}, 12_{d}) aptes à coopérer avec des éléments d'accrochage (14_{g}, 14_{d}) complémentaires d'un véhicule automobile,
**caractérisée en ce qu'**elle comprend des moyens de contrôle (44, 45) de la solidarisation desdits éléments de solidarisation avec lesdits éléments d'accrochage, délivrant un premier et un deuxième signal électrique,
des moyens de détection (15) de la présence d'un enfant dans ladite nacelle, délivrant un troisième signal électrique, et
des moyens de génération d'une alarme (18, 181), en fonction d'une analyse desdits premier, deuxième et troisième signaux électrique,
lesdits moyens de génération d'alarme (18, 181) comprenant des moyens de temporisation, appliquant un premier délai prédéterminé avant la génération d'une alarme, de façon à prendre en compte le temps d'installation d'un enfant dans la nacelle,
lesdits moyens de génération d'alarme (18, 181) prenant en compte au moins une des règles suivantes :
- non génération d'une alarme si un enfant n'est pas présent, ce qui correspond à une nacelle vide, dans le véhicule ou en dehors ;
- non génération d'une alarme si un enfant est présent mais qu'aucune manipulation desdits éléments de solidarisation n'est effectuée, ce qui correspond à une utilisation de ladite nacelle en dehors d'un véhicule ;
- non génération d'une alarme si un enfant est présent et que l'un desdits éléments de solidarisation est détendu pendant un court laps de temps, ce qui correspond à une situation temporaire due au déplacement du véhicule ;
- non génération d'une alarme pendant un laps de temps, après la détection de présence d'un enfant et/ou du verrouillage et/ou du serrage desdits moyens de maintien, ce qui correspond à la période d'installation de la nacelle dans le véhicule ;
- génération d'au moins un signal d'installation partielle ou en cours.

2. Nacelle selon la revendication 1, **caractérisée en ce que** chaque élément de solidarisation (12_{g}, 12_{d}) comprend une portion de sangle (13_{g}, 13_{d}), et **en ce que** lesdits moyens de contrôle (44, 45, 17) de la solidarisation comprennent des moyens de détection de la solidarisation et/ou de la tension suffisante de ladite portion de sangle (13_{g}, 13_{d}).

3. Nacelle selon la revendication 2, **caractérisée en ce que** chaque portion de sangle (13_{g}, 13_{d}) est solidarisée à ladite nacelle à l'aide d'un élément mobile (133) pouvant prendre deux positions, une position de repos, lorsque ladite portion de sangle n'est pas en place ou n'est pas en tension, et une position de solidarisation, assurant la fermeture d'un premier, respectivement d'un deuxième, contact électrique agissant sur ledit premier, respectivement deuxième, signal électrique, lorsque ladite portion de sangle est solidarisée à la nacelle.

4. Nacelle selon la revendication 1, **caractérisée en ce que** lesdits éléments de solidarisation comprennent des pinces Isofix aptes à être solidarisées à des anneaux complémentaires solidaires du véhicule, lesdits moyens de contrôle de la solidarisation correcte comprennent des moyens de détection du verrouillage desdites pinces.

5. Nacelle selon l'une quelconque des revendications 1 à 4, **caractérisée en ce que** lesdits moyens de détection de présence (15) comprennent un dispositif s'étendant sous un matelas, et pouvant prendre deux positions, une position de repos, prise en l'absence d'un poids suffisant sur ledit dispositif, et une position de détection de présence d'un enfant, assurant la fermeture d'un troisième contact électrique, lorsqu'un enfant est présent dans ladite nacelle.

6. Nacelle selon l'une quelconque des revendications 1 à 5, **caractérisée en ce qu'**elle comprend des moyens de détection (17) de verrouillage et/ou de serrage desdits moyens de maintien (16) de l'enfant, délivrant un quatrième signal électrique.

7. Nacelle selon l'une quelconque des revendications 2 à 6, **caractérisée en ce que** lesdits moyens de génération d'alarme (18, 181) comprennent des moyens de temporisation, appliquant un second délai prédéterminé avant la génération d'une alarme, de façon à prendre en compte une tension insuffisante, mais temporaire.

8. Nacelle selon l'une quelconque des revendications 1 à 7, **caractérisée en ce que** lesdits moyens de génération d'alarme (18, 181) assurent l'émission d'alarmes lumineuses, via au moins une diode électroluminescente (191, 192, 193), et/ou d'alarmes audibles (194).

## Patentansprüche

1. Babywanne zum Befördern eines liegenden Kindes, mit Mitteln zum Halten (16) des Kindes in der besagten Babywanne und mit zwei Verbindungselementen (12_{g}, 12_{d}), die mit Elementen zum Einhängen (14_{g}, 14_{d}) zusammenwirken können, welche zur Ausrüstung eines Kraftfahrzeugs gehören, **dadurch gekennzeichnet, dass**
sie über Mittel zum Steuern der Verbindung (44, 45) der besagten Verbindungselemente mit den besagten Elementen zum Einhängen verfügt, die ein erstes und ein zweites elektrisches Signal liefern,
über Mittel (15) zum erfassen der Gegenwart eines Kindes in der besagten Babywanne, die ein drittes elektrisches Signal liefern und,
über Mittel zum Erzeugen einer Alarmmeldung (18, 181) abhängig von einer Analyse des besagten ersten, zweiten und dritten elektrischen Signals, wobei die besagten Mittel zum Erzeugen einer Alarmmeldung (18, 181) über Verzögerungsmittel verfügen, die eine erste vorgegebene Verzögerung vor dem Abgeben einer Alarmmeldung einhalten, um die Zeit zu berücksichtigen, die erforderlich ist, um ein Kind in die Babywanne zu legen, wobei die Mittel zum Erzeugen einer Alarmmeldung (18, 181) mindestens eine der folgenden Regeln befolgen:
- keine Alarmmeldung, wenn kein Kind anwesend ist, was einer leeren Babywanne in oder außerhalb des Fahrzeugs entspricht,
- keine Alarmmeldung, wenn ein Kind anwesend ist, wobei jedoch die Verbindungselemente nicht betätigt wurden, was einer Anwendung der besagten Babywanne außerhalb des Fahrzeugs entspricht;
- keine Alarmmeldung, wenn ein Kind anwesend ist, wobei eines der besagten Verbindungselemente während einer kurzen Zeitdauer entspannt ist, was einer zeitlich begrenzten Lage aufgrund der Fahrzeugbewegung entspricht;
- keine Alarmmeldung während einer bestimmten Zeitdauer, nachdem die Anwesenheit eines Kindes festgestellt wurde und/oder nach dem Verriegeln und/oder Festziehen der besagten Haltemittel, was der Einbauzeit der Babywanne in dem Fahrzeug entspricht;
- Erzeugen von mindestens einem Signal für einen teilweisen oder in der Ausführung befindlichen Einbau.

2. Babywanne nach Anspruch 1,
**dadurch gekennzeichnet, dass**
jedes Verbindungselement (12_{g}, 12_{d}) einen Teil eines Gurtes (13_{g}, 13_{d}) umfasst und, dass die besagten Verbindungskontrollmittel (44, 45, 17) über Mittel zum Erfassen der Verbindung und/oder der ausreichenden Spannung der besagten Gurtteile (13_{g}, 13_{d}) verfügen.

3. Babywanne nach Anspruch 2,
**dadurch gekennzeichnet, dass**
jeder Gurtteil (13_{g}, 13_{d}) mit der besagten Babywanne mit Hilfe eines beweglichen Elementes (133) verbunden ist, das zwei Positionen einnehmen kann, eine Ruheposition wenn der besagte Gurtteil nicht an seinem Platz oder nicht gespannt ist und eine Verbindungsposition, die das Schließen eines ersten bzw. eines zweiten elektrischen Kontaktes sicherstellt, der auf das erste bzw. zweite elektrische Signal einwirkt, wenn der besagte Gurtteil mit der Babywanne verbunden ist.

4. Babywanne nach Anspruch 1,
**dadurch gekennzeichnet, dass**
die besagten Verbindungselemente über Isofix Zangen verfügen, die mit im Fahrzeug angebrachten Ringen verbunden werden können, wobei die besagten Mittel zum Prüfen der richtigen Verbindung über Mittel zum Feststellen der Verriegelung der besagten Zangen verfügen.

5. Babywanne nach einem der Ansprüche 1 bis 4,
**dadurch gekennzeichnet, dass**
die besagten Mittel zum Feststellen der Gegenwart eines Kindes (15) über eine unter einer Matratze ausgelegten Vorrichtung verfügen, wobei sie zwei Positionen einnehmen können, nämlich eine Ruheposition, die beim Fehlen eines ausreichenden Gewichtes auf der besagten Vorrichtung eingenommen wird und eine Position zum Erfassen der Gegenwart eines Kindes, welche das Schließen eines dritten Kontaktes scherstellt, wenn sich ein Kind in der besagten Babywanne befindet.

6. Babywanne nach einem der Ansprüche 1 bis 5,
**dadurch gekennzeichnet, dass**
sie über Mittel zum Feststellen (17) der Verriegelung und/oder der Spannung der besagten Haltemittel (16) für das Kind verfügt, die ein viertes elektrisches Signal liefern.

7. Babywanne nach einem der Ansprüche 2 bis 6,
**dadurch gekennzeichnet, dass**
die besagten Mittel zum Erzeugen einer Alarmmeldung (18, 181) über Verzögerungsmittel verfügen, die eine zweite vorgegebene Verzögerung vor dem Abgeben einer Alarmmeldung anwenden, um eine nicht ausreichende aber zeitlich begrenzte Spannung zu berücksichtigen.

8. Babywanne nach einem der Ansprüche 1 bis 7,
**dadurch gekennzeichnet, dass**
die besagten Mittel zum Erzeugen einer Alarmmeldung (18, 181) das Erzeugen von leuchtenden Alarmmeldungen über mindestens eine Leuchtdiode (191, 192, 193) und/oder von akustischen Alarmmeldungen (194) sicherstellen.

## Claims

1. Carrycot for transporting a child in a lying position, equipped with means for retaining (16) the child within said carrycot and two securing elements (12_{g}, 12_{d}) capable of cooperating with complementary attachment elements (14_{g}, 14_{d}) of a motor vehicle,
**characterised in that** it comprises means for controlling (44, 45) the securing of said securing elements with said attachment elements, issuing a first and second electrical signal,
means for detecting (15) the presence of a child in said carrycot, issuing a third electrical signal, and
means for generating an alarm (18, 181), on the basis of an analysis of said first, second and third electrical signals, said means for generating an alarm (18, 181) comprising timing means, applying a first predetermined delay before the generation of an alarm, so as to take into account the time needed for installing a child in the carrycot,
said means for generating an alarm (18, 181) taking into account at least one of the following rules:
- non-generation of an alarm if a child is not present, which corresponds to an empty carrycot, in the vehicle or outside;
- non-generation of an alarm if a child is present but no manipulation of said securing elements is performed, which corresponds to use of said carrycot outside a vehicle;
- non-generation of an alarm if a child is present and one of said securing elements is relaxed during a short period of time, which corresponds to a temporary situation due to the movement of the vehicle;
- non-generation of an alarm for a period of time, following detection of the presence of a child and/or the locking and/or tightening of said retaining means, which corresponds to the period of installing the carrycot in the vehicle;
- generation of at least one partial or ongoing installation signal.

2. Carrycot according to claim 1, **characterised in that** each securing element (12_{g}, 12_{d}) comprises a strap portion (13_{g}, 13_{d}), and that said means for controlling (44, 45, 17) the securing comprises means for detecting the securing and/or sufficient tension of said strap portion (13_{g}, 13_{d}).

3. Carrycot according to claim 2, **characterised in that** each strap portion (13_{g}, 13_{d}) is secured to said carrycot with the aid of a mobile element (133) which can adopt two positions, a resting position, when said strap portion is not in place or is not under tension, and a secured position, ensuring the closing, respectively, of a first and second electrical contact acting, respectively, on said first and second electric signal, when said strap portion is secured to the carrycot.

4. Carrycot according to claim 1, **characterised in that** said securing elements comprise Isofix clips capable of being secured to additional securing rings of the vehicle, said means for controlling the correct securing comprise means for detecting the locking of said clips.

5. Carrycot according to any one of claims 1 to 4, **characterised in that** said means for detecting a presence (15) comprise a device extending under a mattress, and capable of adopting two positions, a resting position, adopted in the absence of sufficient weight on the device, and a position detecting the presence of a child, ensuring the closure of a third electrical contact, when a child is present in the said carrycot.

6. Carrycot according to any one of claims 1 to 5, **characterised in that** it comprises means for detecting (17) the locking and/or tightening of the said means for retaining (16) the child, issuing a fourth electrical signal.

7. Carrycot according to any one of claims 2 to 6, **characterised in that** said means for generating an alarm (18, 181) comprise timing means, applying a second predetermined delay before generating an alarm, so as to take into account insufficient but temporary tension.

8. Carrycot according to any one of claims 1 to 7, **characterised in that** said means for generating an alarm (18, 181) ensure the issue of luminous alarms via at least one light emitting diode (191, 192, 193), and/or audible alarms (194).
